# EUROPEAN PATENT APPLICATION

(11) **EP 3 438 415 A1**
(43) Date of publication of application: **06.02.2019**
(21) Application number: 18186838.1
(22) Date of filing: 01.08.2018
(51) Int. Cl.: F01D 5/30, F01D 5/34, B23K 20/12

(54) **METHOD OF MAKING INTEGRALLY BLADED ROTOR BY MEANS OF FRICTION WELDING**

(30) Priority: 01.08.2017 US 201715666204
(71) Applicant: United Technologies Corporation, Farmington, CT 06032 (US)
(72) Inventor: MACHINCHICK, Michael F., Cromwell, CT 06416 (US); SCHWARZ, Frederick M., Glastonbury, CT 06033 (US)
(74) Representative: Dehns

(57) **Abstract**

A method of making an integrally bladed rotor (100) is disclosed. The method includes providing a rotor disk (102) comprising a radially outer rim surface (108) that includes a recessed area (138) thereon. A blade (104) having an airfoil and a base (114) is positioned such that a base surface is in contact with the recessed area with a gap (142) between the base surface and the recessed area at a perimeter of the recessed area. Heat, pressure, and motion between the blade and the rotor disk are applied to friction weld the base surface to the recessed area.

## Description

### BACKGROUND

This disclosure is related to the field of bladed rotors generally, and more specifically to integrally bladed rotors.

Bladed rotors such as impellers, blisks, etc. are employed in gas turbines and other machines. The design, construction and materials of bladed rotors often dictate operating limits for the turbines in which they are employed. Extensive efforts have been made over the years to develop new alloys, new fabrication techniques, and new component designs which permit operation of these rotors at higher operating temperatures and/or lead to lighter weight, longer lived components, with all their attendant advantages.

The fan, turbine, and compressor sections of gas turbine engines include one or more circumferentially extending rows or stages of airfoils, commonly called rotor blades, which are axially spaced between rows or stages of fixed airfoils (stator vanes). The rotor blades are connected to and extend radially outwardly from a rotor disk. During operation the centrifugal loads generated by the rotational action of the rotor blades must be carried by the rotor disk within acceptable stress limits.

In one type of a conventional bladed rotor assembly, the rotor disk has a plurality of slots around its radially outer periphery. The blades may comprise a root, a platform, and an airfoil. The platform has opposite facing surfaces. The root attaches to the slot in the disk and the airfoil extends radially out from the disk. The slots and the roots have complementary shapes, typically either a dove tail or a fir tree. The root mates with the slot and the blade extends radially outward therefrom. This type of rotor assembly is relatively heavy because the slots are cut through the rim of the disk creating what is called a "dead rim" where the metal between the slot can pull on the disk with well over 10,000g's and fir tree or dovetail mating structures likewise do not contribute to sustaining the disk's centrifugal load and also pulls with the same 10,000g load, thereby necessitating that the rotor disk be sufficiently sturdy, and thus heavy, in order to accommodate the stresses resulting from the heavy blade attachment area.

Alternatively, the blades may be secured by bonding or welding, to the rotor disc to thereby form an integrally bladed rotor assembly (IBR). A major advantage of an integrally bladed rotor assembly is that there is often no need for an extended blade root or a blade platform. The airfoil may be secured directly to the radially outer periphery of the rotor disk. The absence of an extended root and a blade platform results in a blade that is lighter than a conventional blade. A lighter blade enables the use of a less rigid and lighter rotor disk, in which case the integrally bladed rotor assembly is overall much lighter than a conventional bladed rotor assembly.

### BRIEF DESCRIPTION

A method of making an integrally bladed rotor is disclosed. The method comprises providing a rotor disk comprising a radially outer rim surface that includes a recessed area thereon. A blade comprising an airfoil and a base is positioned such that a base surface is in contact with the recessed area with a gap between the base surface and the recessed area at a perimeter of the recessed area. Heat, pressure, and motion between the blade and the rotor disk are applied to friction weld the base surface to the recessed area.

In some embodiments, the method comprises ejecting friction welding flash through the gap.

In any one or combination of the foregoing embodiments, positioning of the blade comprises contacting the base surface to the recessed area at a low portion of the recessed area.

In any one or combination of the foregoing embodiments, the gap extends from a contact position between the base surface and the recessed area at the recessed area low portion, to the recessed area perimeter.

In any one or combination of the foregoing embodiments, the gap distance between the base surface and the recessed area increases from the recessed area low portion to the recessed area perimeter.

In any one or combination of the foregoing embodiments, the recessed area comprises a linear extended groove in the outer rim surface corresponding to a chord of the airfoil where the airfoil meets the disk.

In any one or combination of the foregoing embodiments, the base surface includes a linear-extending central apex or a linear extending planar surface, and wherein positioning the blade comprises contacting the linear-extending central apex or linear extending planar surface or the with a linear-extending low portion in the groove.

In any one or combination of the foregoing embodiments, the blade further comprises positioning the base surface at an angle of inclination with respect to the recessed area surface of at least 12°.

In any one or combination of the foregoing embodiments, the base surface includes surfaces extending perpendicular to the linear-extending central apex at an overall angle of inclination of less than 170°.

In any one or combination of the foregoing embodiments, the linear-extending central apex comprises a linear-extending sharp edge, and the linear-extending low portion comprises a linear-extending inverse apex sharp edge.

In any one or combination of the foregoing embodiments, the gap distance between the base surface and the recessed area increases from the linear-extending groove low portion to the linear-extending groove perimeter.

In any one or combination of the foregoing embodiments, the base surface and the recessed area each comprise flat rectilinear surfaces or curved surfaces.

In any one or combination of the foregoing embodiments, the blade base includes a peripheral sink surface perpendicular to the outer rim surface.

In any one or combination of the foregoing embodiments, the airfoil is a solid contiguous structure.

In any one or combination of the foregoing embodiments, each of the blade surface and the recessed area comprises a titanium alloy.

Also disclosed is an integrally bladed rotor made by the method of any one or combination of the foregoing embodiments.

Also disclosed is a gas turbine engine comprising an integrally bladed rotor made by the method of any one or combination of the foregoing embodiments.

Also disclosed is a gas turbine engine comprising a fan that comprises an integrally bladed rotor made by the method of any one or combination of the foregoing embodiments.

### BRIEF DESCRIPTION OF THE DRAWINGS

The following descriptions should not be considered limiting in any way. With reference to the accompanying drawings, in which like elements are numbered alike:
FIG. 1 is a schematic depiction of a gas turbine engine cross-section;
FIG. 2 is a schematic depiction of perspective view of an integrally bladed rotor disk outer rim;
FIG. 3 is a schematic depiction of a cross-section view of a blade base in a recessed area of the rim surface for friction welding;
FIG. 4 is a schematic depiction of a cross-section view of a blade base friction welded to the rim; and
FIG. 5 is a schematic depiction of a cross-section view of an alternate configuration of a blade base in a recessed area of the rim surface for friction welding.

### DETAILED DESCRIPTION

A detailed description of one or more embodiments of the disclosed apparatus and method are presented herein by way of exemplification and not limitation with reference to the Figures.

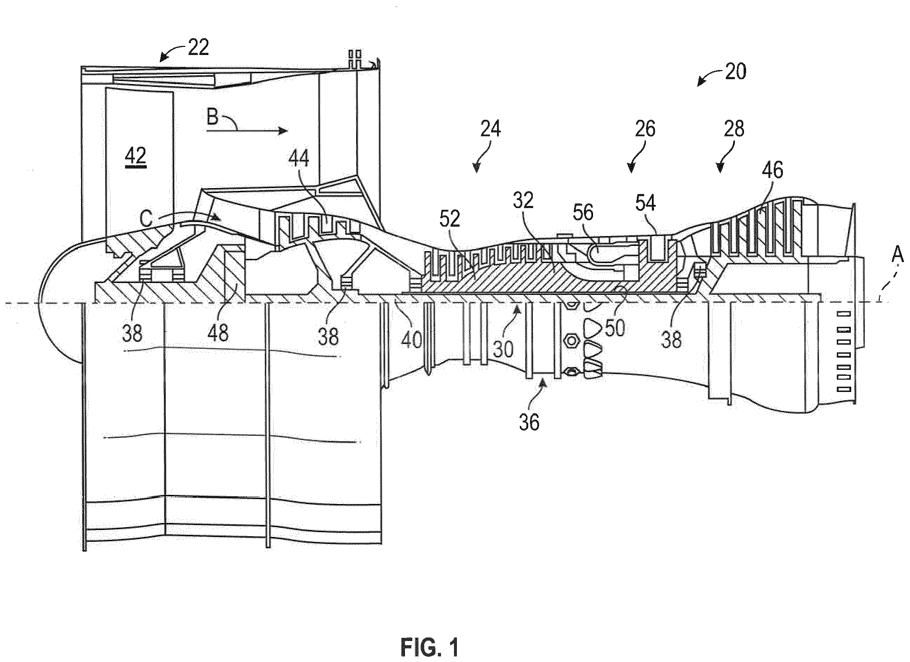

As mentioned above, a method is disclosed for friction welding a blade onto rotor to form an integrally bladed rotor. One application for such an integrally bladed rotor is on a gas turbine engine, for example as a bladed fan. Other applications include compressor rotors or turbine rotors. FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present disclosure is applicable to other gas turbine engines including direct drive turbofans.

A significant amount of thrust is provided by the bypass flow B due to the high bypass ratio. The fan section 22 of the engine 20 is designed for a particular flight condition--typically cruise at about 0.8Mach and about 35,000 feet (10,688 meters). The flight condition of 0.8 Mach and 35,000 ft (10,688 meters), with the engine at its best fuel consumption--also known as "bucket cruise Thrust Specific Fuel Consumption ('TSFC')"--is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R)/(518.7 °R)]^{0.5} . The "Low corrected fan tip speed" as disclosed herein according to one non-limiting embodiment is less than about 1150 ft/second (350.5 m/sec).

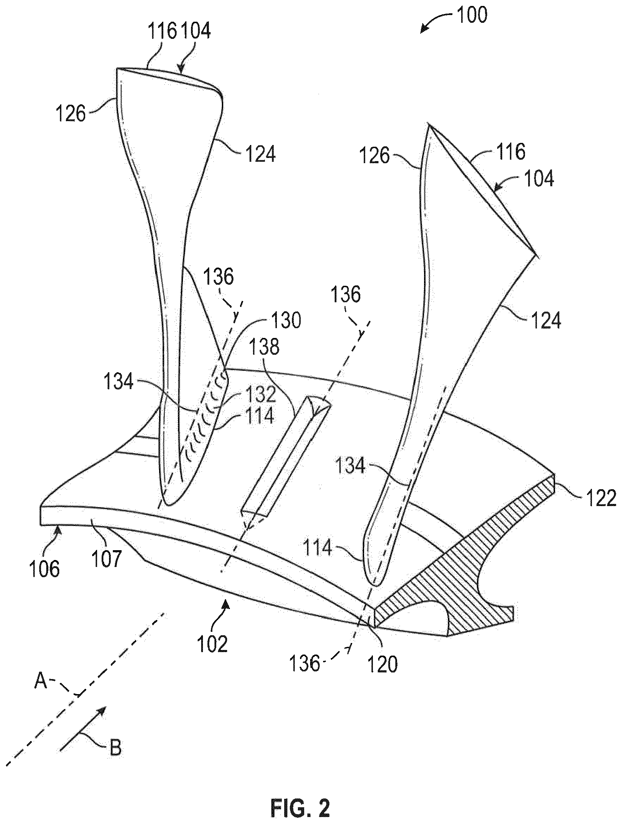

With reference now to FIG. 2, a perspective view of a portion of an integrally bladed rotor 100 is schematically depicted. As shown in FIG. 2, an integrally bladed rotor 100 comprises a disk 102 and blades 104. The disk 102 has an outer rim 106 having a radially inner surface 107, and a radially outer surface 108. Each of the blades 104 includes an airfoil 116 and a base 114. The blades attach, at their bases 114, to the radially outer surface of the rim 106 and extend radially outward therefrom. It should be understood that the blades 104 are only two of a plurality of such blades attached to the disk 102. The disk further includes an upstream edge 120 and a downstream edge 122, relative to the gas flow path B (FIG. 1). The blades have upstream and downstream edges 124, 126. The integrally bladed rotor 100 typically includes a fillet 130, i.e., a curved corner having a radius, adjoining the surfaces of the airfoil and the rim. The fillet serves to reduce the concentration of stress where the airfoils attach to the rim. The fillet itself may experience high concentrations of stress at its base 132, where the surface of the fillet is tangent to the disc rim. A plurality of chords 134 each represent a chord of the base of an associated one of the airfoils, i.e. a line between the upstream edge 120 of the base of the airfoil and the downstream edge 122 of the base of the airfoil. The plurality of chords 134 are typically similarly oriented relative to the longitudinal axis A (FIG. 1). The chords each lie on an associated one of a plurality of chord lines 136 that collectively represent the desired positions of the chords relative to the disk rim.

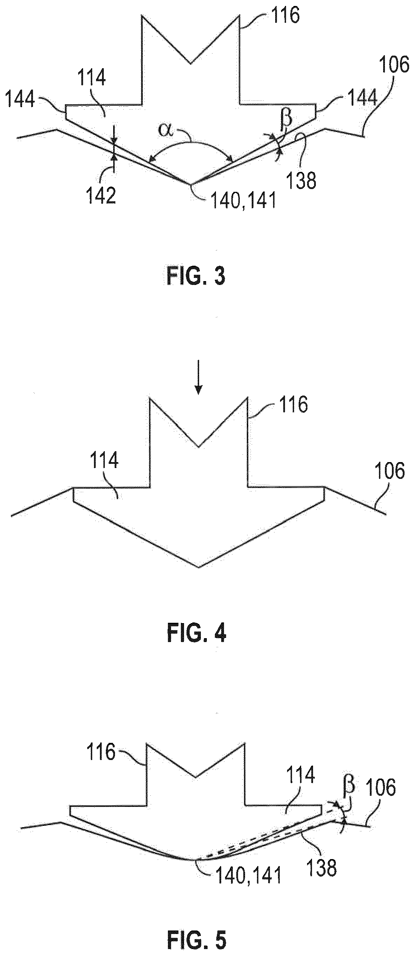

As mentioned above, the blades 104 are welded to the disk 102 by the application of heat (e.g., heat generated by friction), pressure, and motion, such as by linear friction welding (LFW). As further shown in FIG. 2, a recessed area in the form of a slot 138 extending linearly along a chord line 136 is disposed on the surface of the rim 106 to receive a base 114 of a blade 104. It should be noted that although FIG. 2 shows that the trough does not extend to the forward or rear edge of the rim 106, in which case the trough should be longer than the length of the blade base 114 to allow room for movement along the length of the slot 138 during friction welding, and any remaining gap on each end of the slot 138 can be filled after welding with a filler material. In other embodiments, the slot 138 can extend from the forward and rear edges of the rim 106. The welding can be initiated by positioning the blade with respect to the rim as schematically depicted in FIG. 3.

As shown in FIG. 3, an apex 140 of the blade base 114 is positioned in contact with a low portion 141 of the recessed area or notch 138, leaving a gap 142 between the surface of the recessed area or notch 138 and the surface of the base 114 which gets larger with distance from the apex/low portion 140/141. As shown in FIG. 3, the apex 140 can have a sharp edge, and the low portion 141 can have an inverse apex sharp edge. This can provide a technical effect of promoting seating and engagement of the apex 140 and maintaining an open gap from the point of contact to the perimeter of the low recessed area or notch 138. However, in some embodiments, a rounded apex and rounded inverse apex can be used. As shown in FIG. 2, the base 114 can have an overall angle of inclination α. In some embodiments, α can be in a range having a lower end of 60°, 70°, or 80°, and an upper end of 150°, 160°, or 170°. These range limits can be independently combined to produce a number of ranges, and each possible range formed by the above limits is hereby expressly disclosed. As further shown in FIG. 2, a gap angle is shown between the surface of the base 114 and the recessed area or notch 138. In some embodiments, β can be in a range having a lower end of 8°, 12°, or 16°, and an upper end of 25°, 30°, or 35°. These range limits can be independently combined to produce a number of ranges, and each possible range formed by the above limits is hereby expressly disclosed. In some embodiments, the gap angle β (FIGS. 3, 5) can be the same on the left and right sides of the Figures, and in some embodiments, the gap angle β can be different on the left and right sides of the Figures. In some embodiments, the base 114 can include a sink surface 144 (e.g., at a depth less than 0.28 inches) that can be normal to the surface of the rim 106. In some embodiments, the recessed area or notch 138 can have a corresponding countersink surface, although this is not essential as the countersink surface can be created by the base 114 during LFW processing. In some embodiments, a portion of the base can protrude above the rim surface after welding, which can be optionally removed by machining. In some embodiments, the upper surface of the base can be recessed below the rim surface after welding, in which case a portion of the rim surface can be machined after welding to bring the surfaces closer to being flush.

The result of linear friction welding of the blade 104 to the disk 102 is shown in FIG. 4. Linear friction welding begins by applying compressive 134 and oscillatory forces to the blade base 114. The compressive forces 134 can be directed roughly perpendicular to the surface of the disk rim 106. The oscillatory forces 136 are directed along an axis roughly parallel to the longitudinal axis of the groove 138. These forces effectively place the interface between the base and recessed surfaces under high pressure and cause the base to oscillate back and forth relative to the rim. At the interface, frictional heat is generated and material from each part changes to a plastic state. Some of this material flows out, in the form of flash, from between the parts, resulting in gradual decrease in the thickness of the parts. Eventually, the interface comprises substantially all points on the recessed surface, i.e., the base surface and the recessed surface are substantially contiguous over the area of the recessed surface. When the process is terminated, the remaining plastic state material of each part cools and changes back to solid state, forming bonds therein and bonding the two parts together. During the welding process, the blade base 114 will gradually sink into the groove as material from the central point of contact is plasticized and ejected as flash, until the a configuration as shown in FIG. 4 is achieved. At the conclusion of the processing, the surface of the base and the recessed surface are substantially contiguous over the area of the recessed surface, and the weld between the base and the rim is therefore also substantially continuous.

Various materials can be used for the blade base and disk rim. In some embodiments, both the base and the rim comprise nickel alloys, which can be the same alloy for both parts or different alloys. For example, in some embodiments, the blade can be formed from an alloy such as PWA 1228 or equivalent and the disk can be formed from an alloy such as PWA 1215, PWA 1214, or equivalent. In some embodiments, the blade and the base can be formed from the same material, such as PWA 1215 or equivalent. In some embodiments, the gap configuration described herein can provide a technical effect or promoting ejection or removal of flash from the weld zone. Incomplete or irregular ejection or removal of flash from the weld zone can cause defects in the weld joint. Prior art attempts at managing flash removal from friction welding of integrally bladed rotors have involved the formation of standups on the disk rim for LFW attachment of the blades (see U.S. Patent 7,419,082). However, that approach involves machining away of metal from the disk rim to form the standups. Forming the standups by cutting away the metal between each removes superior metal with fine grain structure properties which tends to exist in disk outer diameter areas, exposing coarser grain material that is less resistant to stress from vibration. The embodiments disclosed herein can provide a technical effect of managing flash ejection or removal of a friction weld attachment of a blade to a rotor while promoting formation of a region of fine grain structure metal in the integrally bladed rotor structure.

It should be pointed out that the above embodiments are provided as examples, which can of course subject to variation and modification by the skilled person. For example, FIGS. 3 and 4 disclose an example embodiment where the recessed area or groove 138 and the base 114 each have flat rectilinear surfaces. As mentioned above, this can provide a technical effect of promoting engagement and maintenance of a gap between the components. However, other configurations including arcuate surfaces on either the disk or the blade are possible. For example, FIG. 5 shows analogous components to FIGS. 3 and 4, but with curved surfaces for the recessed area or groove 138 and the base 114.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A method of making an integrally bladed rotor (100), comprising
providing a rotor disk (102) comprising a radially outer rim surface (108) that includes a recessed area (138) thereon;
positioning a blade (104) comprising an airfoil and a base (114) such that a base surface is in contact with the recessed area with a gap (142) between the base surface and the recessed area at a perimeter of the recessed area; and
applying heat, pressure, and motion between the blade and the rotor disk to friction weld the base surface to the recessed area.

2. The method of claim 1, further comprising ejecting friction welding flash through the gap (142).

3. The method of claim 1 or 2, wherein positioning the blade comprises contacting the base surface to the recessed area at a low portion (141) of the recessed area.

4. The method of any preceding claim, wherein the gap extends from a contact position between the base surface and the recessed area at the recessed area low portion, to the recessed area perimeter, and preferably wherein the gap distance between the base surface and the recessed area increases from the recessed area low portion to the recessed area perimeter.

5. The method of any preceding claim, wherein the recessed area comprises a linear extended groove in the outer rim surface corresponding to a chord of the airfoil where the airfoil meets the disk.

6. The method of any preceding claim, wherein the base surface includes a linear-extending central apex or a linear extending planar surface, and wherein positioning the blade comprises contacting the linear-extending central apex or linear extending planar surface or the with a linear-extending low portion in the groove.

7. The method of claim 6, wherein the blade further comprises positioning the base surface at an angle of inclination (β) with respect to the recessed area surface of at least 12°, and/or wherein the base surface includes surfaces extending perpendicular to the linear-extending central apex at an overall angle of inclination (α) of less than 170°.

8. The method of claim 6, wherein the linear-extending central apex comprises a linear-extending sharp edge, and the linear-extending low portion comprises a linear-extending inverse apex sharp edge.

9. The method of claim 6, wherein the gap distance between the base surface and the recessed area increases from the linear-extending groove low portion to the linear-extending groove perimeter.

10. The method of any preceding claim, wherein the base surface and the recessed area each comprise flat rectilinear surfaces or curved surfaces.

11. The method of any preceding claim, wherein the blade base includes a peripheral sink surface perpendicular to the outer rim surface.

12. The method of any preceding claim, wherein the airfoil is a solid contiguous structure, and/or wherein each of the blade surface and the recessed area comprises a titanium alloy.

13. An integrally bladed rotor made by the method of any preceding claim.

14. A gas turbine engine (20) comprising the integrally bladed rotor of claim 13.

15. The gas turbine engine of claim 14, comprising a fan (42) that comprises the integrally bladed rotor of claim 13.
